# EUROPEAN PATENT SPECIFICATION

(11) **EP 0 306 862 B1**
(45) Date of publication and mention of the grant of the patent: **16.06.1993**
(21) Application number: 88114404.2
(22) Date of filing: 03.09.1988
(51) Int. Cl.: C01B 33/146, C08K 9/06, C09C 1/30

(54) **Method of hydrophobing silica**
Verfahren zum Hydrophobieren von Kieselerde
Procédé pour rendre hydrophobe le silice

(30) Priority: 10.09.1987 US 94970
(43) Date of publication of application: 15.03.1989
(73) Proprietor: DOW CORNING CORPORATION, Midland Michigan 48640 (US)
(72) Inventor: Saam, John Carlton, Midland Michigan (US); Sands, Bruce William, Columbus Georgia (US)
(74) Representative: Sternagel, Hans-Günther, Dr.

(56) References cited:
- EP-A- 0 166 396
- US-A- 4 208 316
- US-A- 4 221 688
- US-A- 4 618 645

## Description

This invention relates to a process for producing hydrophobic colloidal silica.

Iler in U S -A- 2,786,042, issued March 19, 1957, described a process of adding an aqueous solution of a silanolate which is a strong alkali salt of a monovalent hydrocarbon-substituted silanol to an aqueous sol of colloidal particles of amorphous silica. These treated silica particles could be recovered by drying or they would be transferred from the original aquasol to an organosol by mixing the aquasol after treatment at a pH below 6 with an organic liquid and removing the water.

Another method of producing hydrophobic silicas was shown by Wetzel in U S -A- 2,802,850, issued August 13, 1957, wherein a lower alkyltrichlorosilane was hydrolysed in a water-in-oil emulsion containing an alkali-metal silicate. The treated silica was filtered from the oil, washed with water, and dried to yield the desired product. The treated silica is suitable for the preparation of greases and as fillers for elastomeric materials.

Youngs in U S -A 3,634,288, issued January 11, 1972, prepared a hydrophobic silica sol by emulsifying a silica hydrosol in an oil dispersing medium, stripping water from the system, adding a silicone oil, and heating to allow the silicone oil to react with the silica - OH groups, resulting in an oil dispersion of the hydrophobic silica.

US-A-4,208,316 is related to hydrophobic precipitated silica useful as reinforcement for polyorganosiloxane elastomers which are prepared by initially forming aqueous colloidal silica by adding conc. H₂SO₄ to a sodium silicate solution, whereby an alkaline pH value is maintained. This suspension is reacted with an organosilicone compound, preferably dimethylchlorosilane. the desired product is separated dried and subsequently ground.

These processes yielded a dried, treated silica particle that was hydrophobic, or an organosol of the treated silica.

Johnson et al. teach in U S -A 4,221,688, issued September 9, 1980, a silicone emulsion which provides an elastomeric product. Their eulsion consists essentially of an anionically stabilized hydroxylated polydiorganosiloxane which contains about 2 silicon-bonded hydroxyls per molecule, an organic tin compound, and a colloidal silica, the emulsion having a pH in the range of 9 to 11.5 inclusive.

It is the object of the invention to provide a method for making a storage stable aqueous emulsion of hydrophobic colloidal silica. This object has been attained by a method for making a storage stable aqueous emulsion of hydrophobic colloidal silica by combining to form an aqueous emulsion,
(a) aqueous colloidal silica having primary silica particle diameters in the range of 2 to 100 nanometers and silica concentrations up to 65 percent based on the combined weight of silica and water, and
(b) a low molecular weight polyorganosiloxane having an average of from 3 to 40 siloxane units of the formula RR'SiO and an average of from 0 to 10 siloxane units of the formula R₄₋ₓSi where x has an average value greater than 2 with a maximum of 4 and each unsatisfied valence of silicon in formula R₄₋ₓSi being satisfied with a hydroxyl radical or a divalent oxygen atom bonded to silicon atoms, the polyorganosiloxane being terminated by at least two hydroxyl radicals and the hydroxyl content not exceeding 15 weight percent based on weight of the polyorganosiloxane, each R and R' in the polyorganosiloxane being selected from monovalent radical of the group consisting of lower alkyl, aryl, alkenyl, aralkyl, and haloalkyl; the ratio of silica to polyorganosiloxane being at least 2:1, and adjusting the pH of the emulsion into the rage of 7.0 to 10,
characterized in that
(c) an anionic surfactant in the amount of 0.2 to 2 weight percent based on the amount of total solids is combined with (a) and (b) and the aqueous colloidal silica (a) is first structured by aging at pH of 4 to 5 before combining with (b) and (c).

This emulsion may be dried to yield a crusty, white material which may be easily ground to a fine fluffy white powder. The treated powder is hydrophobic and oliophilic.

The method consists essentially of combining an aqueous colloidal silica dispersion, and a hydroxyl containing, low molecular weight polyorganosiloxane in the form of an emulsion produced using an anionic surfactant such as dodecylbenzene sulfonic acid. After the emulsion mixture is homogeneous, its pH is adjusted to a range of 7.0 to 10 to provide a storage stable aqueous emulsion of hydrophobic colloidal silica.

The aqueous emulsion of hydrophobic colloidal silica may be dried to provide a solid hydrophobic silica which may be comminuted to form a fine powder which is not dispersable or soluble in water but is dispersable in toluene.

The powdered hydrophobic colloidal silica may be used as a reinforcement for silicone rubber. The aqueous emulsion of hydrophobic colloidal silica may be mixed with an emulsion of polydiorganosiloxane in emulsion form to yield a reinforced polymer when the water is removed from the emulsion.

Colloidal sized particles of silica have been found useful as thickeners and as reinforcing filler in silicone rubber. When silicone rubber is reinforced with untreated silica, a reaction takes place that causes the mixture to become tough and nervy, making it difficult to further process the mixture unless such processing is done immediately after the mixture is made. It is known that such a reaction, known as structuring, or crepe aging, can be prevented by treating the surface of the silica with materials to react with the hydroxyl radicals present on the silica surface. Many methods have been devised for treating silica as a powder and as a water dispersion to prevent this undesired structuring. The instant invention is a simplified method of producing a treated silica particularly useful for reinforcing silicone rubber.

The colloidal silica used in the instant invention is commercially available. These aqueous silica sols, known as hydrosols, are dispersions of silica in water, having a pH of from about 8.2 to about 11.0, stabilized with sodium ions, aluminum ions, or ammonia. The primary silica particles can vary from 2 to 100 nanometres in average diameter with a preferable range of from 5 to 25 nanometres. The hydrosols can have up to 65 percent by weight silica with the usual range varying from 15 to 50 percent silica by weight.

The polyorganosiloxane useful in the instant invention is a low molecular weight hydroxyl containing polymer which can vary from a resin to a fluid in form. The polyorganosiloxane has an average of from 3 to 40 siloxane units of the formula RR'SiO and an average of from 0 to 10 siloxane units of the formula R₄₋ₓSi, the polyorganosiloxane being terminated by at least two hydroxyl radicals but the hydroxyl content not exceeding 15 percent based on the weight of the polyorganosiloxane. Each R and R' in the polyorganosiloxane are selected from a monovalent radical of the group consisting of lower alkyl, aryl, alkenyl, aralkyl, and haloalkyl. Preferably, R and R' are methyl, ethyl, phenyl, vinyl, and 3,3,3-trifluoropropyl radicals with methyl being most preferred because it is readily available. The value of x has an average value of greater than 2 with a maximum of 4. Each unsatisfied valence of silicon in the formula R₄₋ₓSi is satisfied with a hydroxyl radical or a divalent oxygen atom bonded to a silicon atom. The preferred polyorganosiloxane is a hydroxyl endblocked polydimethylsiloxane having about 4 weight percent hydroxyl radical with a molecular weight in the range of 750 to 800.

An anionic surfactant is necessary to emulsify the polydiorganosiloxane. Anionic surfactants which are useful include salts of surface active sulfonic acids, alkali metal sulforicinates, sulfonated glycerylesters of fatty acids, salts of sulfonated monovalent alcohol esters, amides of amino sulfonic acid such as the sodium salt of oleyl methyl-tauride, sulfonated aromatic hydrocarbon salts such as sodium alpha-naphtholene monosulphate, condensation products of naphthelene sulfonic acids with formaldehyde, and sulfates such as ammonium lauryl sulfate, triethanol amine lauryl sulfate, and sodium lauryl ether sulfate. The preferred anionic surfactants are the alkali metal salts of the sulfonic acids, particularly the sodium salts. The sulfonic acid can be illustrated by aliphatically substituted benzenesulfonic acids, aliphatically substituted naphthelene sulphonic acids, aliphatic sulfonic acids, silylalkylsulfonic acids, and aliphatically substituted diphenylether sulfonic acids. Particularly useful anionic surfactants are dodecylbenzenesulfonic acid and the sodium salt of dodecylbenzenesulfonic acid.

Following procedure is used to yield a hydrophobic silica with improved reinforcing properties in silicone rubber by structuring a colloidal silica dispersion before treatment. An aqueous colloidal silica dispersion is stirred with a cation exchange resin to lower the pH to the acid side. Optimum results are obtained with a pH of about 5. The acidified colloidal silica is then aged while stirring. The structuring of the silica raises the viscosity of the dispersion and raises the pH. After the colloidal silica dispersion has structured, it is slowly added with stirring to a polyorganosiloxane emulsion prepared by mixing polyorganosiloxane, water and anionic surfactant together and homogenizing the mixture by passing through a colloid mill or similar intense-type mixer. Three passes through a colloid mill at 316 kg per cm² gave a stable emulsion. In this case, the sodium salt of dodecylbenzene sulfonic acid was used as the anionic surfactant. After mixing to give a homogeneous mixture, the pH is raised to between 7 and 10 with dilute sodium hydroxide and stirring continued. After a period, such as 1 hour, the viscosity will drop to yield an emulsion of hydrophobic colloidal silica similar to that prepared by the other methods except, when used to reinforce silicone rubber, this method will yield higher physical properties in the compounded and cured silicone rubber.

The amount of polyorganosiloxane used in the method of the instant invention is dependent upon the amount of colloidal silica in the emulsion. Useful products are obtained when the amount of polyorganosiloxane is below 50 percent by weight of the weight of colloidal silica present. When used as reinforcement in silicone rubber, the useful amount is between 6 and 35 percent. Below 6 percent, the amount of polyorganosiloxane is not sufficient to fully react with the silica surface so that when such a material is used to reinforce silicone rubber, the reinforced silicone rubber stock will become tough and nervy on storage. When above 35 percent of polyorganosiloxane is used, the hydrophobic colloidal silica, when mixed into silicone rubber, will yield a reinforced silicone rubber stock that will be sticky on the surface.

The amount of anionic surfactant used is based upon the amount of polyorganosiloxane used. There must be sufficient anionic surfactant present to emulsify the polyorganosiloxane used. When using the sodium salt of dodecylbenzene sulfonic acid, about 1 percent of the surfactant based on the weight of polyorganosiloxane is sufficient to emulsify the polyorganosiloxane. Higher levels of about 3 percent were found to yield higher physical properties in a silicone rubber compounded using the hydrophobic colloidal silica produced in this method. Amounts of surfactant in excess would adversely effect the properties of the finished articles produced using such a hydrophobic colloidal silica. The amount of surfactant based on the total solids in the emulsion can vary from 0.2 to 2 percent. Particularly useful emulsions are produced at about 1 percent surfactant based upon total solids in the emulsion.

The method of the instant invention yields a stable aqueous emulsion of hydrophobic colloidal silica when the pH of the final emulsion is between 7 and 10. This stable emulsion can be used in conjunction with emulsified silicone polymers to produce reinforced silicone bases suitable for compounding into silicone rubber stocks. The polymer emulsion and silica emulsion are mixed together, then allowed to age for a period of time, for instance, from 1 to 4 days, to allow for any interaction between them. The mixed emulsion is then dried by evaporating the water by air drying and vacuum drying at elevated temperature to yield a dry reinforced silicone rubber base. The base is then compounded on a 2 roll mill with organic peroxide catalyst and any other desirable silicone rubber additives in the conventional, well-known manner.

The stable hydrophobic colloidal silica emulsion of the instant invention may also be used by evaporating the water from the emulsion by air drying or heating to yield a crusty, white material. This material is easily ground to a fine white powder. This powder is a hydrophobic silica which is suitable for the conventional uses of such materials. It may be used as reinforcement in conventional silicone rubber gum to produce a reinforced silicone rubber base that is not subject to the structuring on aging that is observed when untreated colloidal silica is mixed with a silicone rubber gum.

The following examples are presented for purposes of illustrating the invention and should not be construed as limiting the scope of the invention which is properly delineated in the claims.

### Comparative Example 1

This example illustrates one method of producing a hydrophobic silica.

A mixture of 200 g of a colloidal silica having 30 weight percent of SiO₂, pH of 9.7, and a particle size of 70 to 80 Angstrom and 20 g of a shortchain hydroxyl endblocked polydimethylsiloxane fluid having 3.9 weight percent hydroxyl radical was rapidly stirred for 16 hours at 23°C. The mixture was given 3 passes at 316 km/cm² through a homogenizer. No mixing or emulsification resulted; on standing the mixture separated into two phases. Then 0.704 g of dodecylbenzenesulfonic acid (DBSA) in 5 g of water (^{∼}1% by weight DBSA on solids) were added with simple stirring to achieve a homogeneous mixture. The emulsion was neutralized to a pH of 7.3 using 79 g of 1 percent by volume hydrochloric acid.

### Comparative Example 2

A second method of producing a hydrophobic silica is shown.

A mixture of 60 g of the polydimethylsiloxane fluid of Example 1, 138 g of water, and 2.65 g of a 23% solution of a sodium salt of dodecylbenzenesulfonic acid was homogenized at 316 kg/cm² for 3 passses to give a stable mechanical emulsion (2.99% solids).

A mixture of 600 g of the colloidal silica of comparative Example 1 and 1.8 g of dodecylbenzenesulfonic were mixed together, stirred well, and adjusted to a pH of 7.7 using 106 ml of 1.2 molar hydrochloric acid.

While stirring the silica emulsion, the polydimethylsiloxane emulsion was slowly added, then stirred for 1 hour.

### Example 3

The method of producing a hydrophobic silica according to the present invention is shown. This silica was modified to produce a more highly structured silica before being made hydrophobic.

The colloidal silica of Example 1 was treated with sufficient ion exchange resin to reduce the pH to 4.8. The silica was stirred in a closed system for 20 hours. Then 58 g of this aged acidic silica was added with stirring to 19.3 g of the polydimethylsiloxane emulsion of comparative Example 2. After mixing, the pH was adjusted to 8.0 with a 2 percent by weight solution of sodium hydroxide. The silica emulsion was thick as it was added, causing the mixture of silica and polydimethylsiloxane to be thick. After stirring for an hour at the pH of 8, the mixture dropped in viscosity to a lower viscosity. The final emulsion was stable for at least 49 days.

When dried, the emulsion left a crusty white material which was easily ground to a fluffy white powder which floated on water but dispersed readily in toluene.

### Example 4

A series of compositions were prepared illustrating the methods of the comparative example 1 and of example 3
A high molecular weight silicone polymer was prepared in an emulsion. A mixture of 1122 g of cyclodimethylsiloxanes having from 3 to 8 dimethylsiloxy units per molecule, 1.96 g of methylvinylcyclosiloxane, 1800 g of water, and 34.7 g of dodecylbenzenesulfonic acid were homogenized by passing 3 times through a homogenizer at 316 kg/cm². The emulsion was heated for 3 hours at 90°C. while stirring, then cooled to 2-4°C. for about 4 days followed by adjusting to a pH of 7.5 using about 240 ml of a 2 percent solution of sodium hydroxide. The emulsion was 31.7% solids. A portion of the emulsion was coagulated and the polymer recovered. The polymer had a weight average molecular weight of 576,000 and a Williams Plasticity of 0.96 mm.
A) A portion of this polymer emulsion was blended with untreated colloidal silica.
A mixture of 200 g of this polymer emulsion (63.4 g of polymer) was mixed with 63.3 g of the untreated colloidal silica of Example 1 (19.0 g of silica). This resulted in 30 parts of silica per 100 parts of polymer. After 24 hours at room temperature, the pH was adjusted from 9.9 to 7.5 by adding a 1 percent solution of acetic acid. The emulsion was poured into a large Teflon lined pan and placed in a hood for 48 hours to evaporate the water. The product was 84 g of an extremely brittle, waxy material. When it was attempted to mill a portion of the material, it could not be done; it merely ground to a finer powder.
B) A portion of this polymer emulsion was blended with treated colloidal silica.
A mixture of 437 g of this polymer emulsion and 225 g of th colloidal silica emulsion of comparative Example 1 after treating were shaken together and allowed to stand at room temperature for 4 days. This mixture was then coagulated by pouring in a dish, air drying at room temperature and vacuum oven drying at 80-100°C. A 60 g portion of the dried polymer-silica mixture was milled together with 0.48 g of 2,5-bis(tertbutylperoxy)-2,5-dimethylhexane catalyst at 50% active material to yield a catalysed material. This was pressed into a sheet and cured 10 minutes at 171°C. The cured sheet was cut into specified test bars and tested according to ASTM D 2240 for durometer and ASTM D 412 for tensile strength and ultimate elongation. The results were as shown in Table I.
C) A portion of the polymer emulsion was cured without the silica reinforcement.
The material and procedure of 4B was repeated, but the colloidal silica emulsion was not added to the polymer emulsion.
The results were as shown in Table I.
D) A portion of the polymer emulsion was blended with the structured hydrophobic silica.
A mixture of 170 g of this polymer emulsion and 72 g of the structured hydrophobic silica emulsion of Example 3 were stirred together for 24 hours at room temperature. The mixture was coagulated by pouring in a dish, air drying at room temperature and vacuum oven drying at 100°C. for 2 hours. The dried mixture was catalyzed, molded, and tested as in Example 4B. The results were as shown in Table I.

**Table I**

| Sample | Durometer | Tensile Strength | Elongation |
|---|---|---|---|
| 4A | no usable product | MPA | Percent |
| 4B | 22 | 1.96 | 770 |
| 4C | 11 | 0.21 | 177 |
| 4D | 26 | 5.12 | 743 |

This example illustrates the usefulness of the treated silica in reinforcing a silicone polymer.

## Claims

1. A method for making a storage stable aqueous emulsion of hydrophobic colloidal silica by combining to form an aqueous emulsion,
(a) aqueous colloidal silica having primary silica particle diameters in the range of 2 to 100 nanometers and silica concentrations up to 65 percent based on the combined weight of silica and water, and
(b) a low molecular weight polyorganosiloxane having an average of from 3 to 40 siloxane units of the formula RR'SiO and an average of from 0 to 10 siloxane units of the formula R₄₋ₓSi where x has an average value greater than 2 with a maximum of 4 and each unsatisfied valence of silicon in the formula R₄₋ₓSi being satisfied with a hydroxyl radical or a divalent oxygen atom bonded to silicon atoms, the polyorganosiloxane being terminated by at least two hydroxyl radicals and the hydroxyl content not exceeding 15 weight percent based on weight of the polyorganosiloxane, each R and R' in the polyorganosiloxane being selected from monovalent radical of the group consisting of lower alkyl, aryl, alkenyl, aralkyl, and haloalkyl; the ratio of silica to polyorganosiloxane being at least 2:1, and adjusting the pH of the emulsion into the range of 7.0 to 10,
**characterized in that**
(c) an anionic surfactant in the amount of 0.2 to 2 weight percent based on the amount of total solids is combined with (a) and (b) and the aqueous colloidal silica (a) is first structured by aging at pH of 4 to 5 before combining with (b) and (c).

2. Hydrophobic silica obtainable by evaporating water from the aqueous emulsion of claim 1 and comminuting to a fine powder which is not dispersable or soluble in water but is dispersable in toluene.

3. Use of the aqueous emulsion of claim 1 or of the hydrophobic silica of claim 2 for reinforcing polyorganosiloxane.

4. Use of the aqueous emulsion of claim 1 producing a reinforced silicone base by mixing the aqueous emulsion with an anionic emulsion of a high molecular weight polyorganosiloxane aging the mixture to allow any interaction between them, then removing the water to give a reinforced silicone rubber base.

## Patentansprüche

1. Verfahren zum Herstellen einer lagerstabilen, wäßrigen Emulsion eines hydrophoben kolloidalen Siliziumdioxids durch Vereinigen von
(a) wäßrigem kolloidalem Siliziumdioxid mit einem Teilchendurchmesser primärer Siliziumdioxidteilchen im Bereich von 2 bis 100 nm und Siliziumdioxidkonzentrationen bis zu 65%, bezogen auf das kombinierte Gewicht von Siliziumdioxid und Wasser, und
(b) einem Polyorganosiloxan mit niedrigem Molekulargewicht, mit im Mittel von 3 bis 40 Siloxaneinheiten der Formel RR'SiO und im Mittel von 0 bis 10 Siloxaneinheiten der Formel R₄₋ₓSi, wobei x einen mittleren Wert von größer als 2 mit einem Maximum von 4 hat und jede unabgesättigte Valenz des Siliziums in der Formel R₄₋ₓSi mit einer Hydroxylgruppe oder einem zweiwertigen Sauerstoffatom, das an Siliziumatome gebunden ist, abgesättigt ist, wobei das Polyorganosiloxan mindestens zwei endständige Hydroxylgruppen aufweist und der Hydroxylgruppengehalt 15 Gew.-%, bezogen auf Gewicht des Polyorganosiloxans, nicht übersteigt, jedes R und jedes R' in dem Polyorganosiloxan ein einwertiger Rest ist, ausgewählt aus der aus niederem Alkyl, Aryl, Alkenyl, Aralkyl und Haloalkyl bestehenden Gruppe;
um eine wäßrige Emulsion auszubilden, wobei das Verhältnis von Siliziumdioxid:Polyorganosiloxan mindestens 2:1 beträgt und der pH-Wert der Emulsion in dem Bereich von 7 bis 10 eingestellt wird,
**dadurch gekennzeichnet**, **daß**
(c) ein anionisches oberflächenaktives Mittel in einer Menge von 0,2 bis 2 Gew.-%, bezogen auf Gesamtfeststoffe, mit (a) und (b) kombiniert wird und das wäßrige kolloidale Siliziumioxid (a) zuerst durch Altern bei pH 4 bis 5 strukturiert wird, ehe es mit (b) und (c) vereinigt wird.

2. Hydrophobes Siliziumdioxid, erhältlich durch Verdampfen von Wasser aus der wäßrigen Emulsion nach Anspruch 1 und Verkleinern zu einem feinen Pulver, das in Wasser nicht dispergierbar oder löslich ist, jedoch in Toluol dispergierbar ist.

3. Verwendung der wäßrigen Emulsion von Anspruch 1 oder des hydrophoben Siliziumdioxids nach Anspruch 2 zum Verstärken von Polyorganosiloxan.

4. Verwendung der wäßrigen Emulsion von Anspruch 1 zum Herstellen einer vertärkten Silikongrundmasse durch Mischen der wäßrigen Emulsion mit einer anionischen Emulsion eines Polyorganosiloxans mit hohem Molekulargewicht, Altern der Mischung, um eine Reaktion der Bestandteile zu ermöglichen, und Entfernen des Wassers, um einen verstärkten Silikonkautschukgrundstoff zu erzeugen.

## Revendications

1. Un procédé de préparation d'une émulsion aqueuse de silice colloïdale hydrophobe, stable au stockage, en combinant pour former une émulsion aqueuse,
(a) une silice colloïdale aqueuse ayant des diamètres de particules primaires de silice compris dans l'intervalle de 2 à 100 nanomètres et des concentrations en silice d'au plus 65 pour cent par rapport au poids total de silice et d'eau, et
(b) un polyorganosiloxane de bas poids moléculaire ayant en moyenne 3 à 40 motifs siloxanes de la formule RR'SiO et en moyenne 0 à 10 motifs siloxane de la formule R₄₋ₓSi, x ayant en moyenne une valeur plus grande que 2 et un maximum de 4, chaque valence de silicium non-satisfaite dans la formule R₄₋ₓSi étant satisfaite par un radical hydroxyle ou un atome d'oxygène divalent lié aux atomes de silicium, le polyorganosiloxane étant terminé par au moins deux radicaux hydroxyle et la teneur en radicaux hydroxyle n'excédant pas 15 pour cent en poids par rapport au poids du polyorganosiloxane, chaque R et R' du polyorganosiloxane étant un radical monovalent choisi dans le groupe formé par les radicaux alkyles inférieurs, aryles, alcényles, aralkyles et halogénalkyles ; le rapport de la silice au polyorganosiloxane étant d'au moins 2:1, et en ajustant le pH de l'émulsion dans l'intervalle de 7,0 à 10,
caractérisé en ce que
(c) un agent tensio-actif anionique, en une quantité de 0,2 à 2 pour cent en poids par rapport à la quantité de matière sèche totale, est combiné à (a) et (b), et la silice colloïdale aqueuse (a) est d'abord structurée par vieillissement à un pH de 4 à 5 avant d'être combinée à (b) et (c).

2. Silice hydrophobe pouvant être obtenue par évaporation de l'eau de l'émulsion aqueuse de la revendication 1 et broyage en une poudre fine qui n'est pas dispersable ni soluble dans l'eau, mais qui est dispersable dans le toluène.

3. Utilisation de l'émulsion aqueuse de la revendication 1 ou de la silice hydrophobe de la revendication 2 pour renforcer un polyorganosiloxane.

4. Utilisation de l'émulsion aqueuse de la revendication 1 pour produire une base de silicone renforcée par mélange de l'émulsion aqueuse avec une émulsion anionique d'un polyorganosiloxane de haut poids moléculaire, vieillissement du mélange pour permettre toute interaction entre elles, puis élimination de l'eau pour obtenir une base de caoutchouc de silicone renforcée.
